Europäisches Patentamt

European Patent Office

Office européen des brevets

(11) Numéro de publication: **0 275 741**
**A1**

(12) **DEMANDE DE BREVET EUROPEEN**

(21) Numéro de dépôt: **87402821.0**

(22) Date de dépôt: **11.12.87**

(51) Int. Cl.4: **H01G 4/20** , H01G 4/38 , H01G 4/30

---

La demande, qui etait incomplète au moment du dépot, est publiée telle quelle (article 93 (2) CBE). Le passage de la description qui comporte manifestement une omission est présenté comme tel.

(30) Priorité: **16.12.86 FR 8617574**

(43) Date de publication de la demande:
**27.07.88 Bulletin 88/30**

(84) Etats contractants désignés:
**DE GB IT NL**

(71) Demandeur: **COMPAGNIE EUROPEENNE DE COMPOSANTS ELECTRONIQUES LCC**
**50, rue Jean-Pierre Timbaud**
**F-92400 Courbevoie(FR)**

(72) Inventeur: **Pageaud, Michel**
**THOMSON-CSF SCPI 19, avenue de Messine**
**F-75008 Paris(FR)**
Inventeur: **Masson, Jean-Luc**
**THOMSON-CSF SCPI 19, avenue de Messine**
**F-75008 Paris(FR)**
Inventeur: **Joder, Catherine**
**THOMSON-CSF SCPI 19, avenue de Messine**
**F-75008 Paris(FR)**

(74) Mandataire: **Guérin, Michel et al**
**THOMSON-CSF SCPI 19, avenue de Messine**
**F-75008 Paris(FR)**

---

(54) **Condensateur à film plastique métallisé à coefficient de température défini et à bonne stabilité dans le temps.**

(57) L'invention concerne un condensateur feuilleté du type à coefficient de température défini et à bonne stabilité dans le temps, constitué par un empilement d'éléments diélectriques séparés par des électrodes, les électrodes étant reliées par des connexions électriques latérales, les paires entre elles et les impaires entre elles. Les éléments diélectriques comprennent deux matériaux différents et les électrodes sont constituées de métallisations (2,3) déposées sur les faces opposées de l'un des diélectrique (1) qui est du polypropylène ou du polyester, l'empilement étant réalisé de façon à ce qu'une même électrode sépare deux couches diélectriques de natures différentes (1,10).

## FIG_2

# CONDENSATEUR A FILM PLASTIQUE METALLISE, A COEFFICIENT DE TEMPERATURE DEFINI ET A BONNE STABILITE DANS LE TEMPS

La présente invention concerne un condensateur à diélectrique film plastique métallisé, à coefficient de température défini et à bonne stabilité dans le temps.

Un tel condensateur se définit par son coefficient de température, sa stabilité aux essais de variation rapide en température et sa stabilité aux essais climatiques en atmosphère humide. Ces trois paramètres sont fonction des diélectriques utilisés et de la technologie de fabrication.

On connaît la technologie des condensateurs bobinés à armatures en étain ou en aluminium et à diélectrique nu sous forme de film plastique. Selon cette technologie, un coefficient de température stable et une bonne stabilité aux essais climatiques ne peuvent être obtenus que par l'utilisation de diélectriques en polystyrène et en polypropylène associés à des armatures massives. Ces condensateurs ont pour inconvénients d'être d'un volume très important d'une part et d'autre part de ne pas pouvoir être réalisés par empilement.

On connaît également la technologie des condensateurs empilés utilisant pour diélectrique des films plastiques métallisés en polycarbonate ou en polysulfone. Ces deux diélectriques ont pour inconvénient de posséder un coefficient d'absorption d'eau très important. Ceci nécessite alors l'utilisation d'un matériau d'obturation de très bonne perméabilité à la vapeur d'eau afin d'obtenir une bonne stabilité climatique. Ces matériaux sont chers et difficiles à mettre en oeuvre.

Afin de pallier ces inconvénients. l'invention propose un condensateur utilisant un film en matière plastique filmable métallisé sur ses deux faces associé à un film plastique de nature différente et dépourvu de métallisations. L'association de deux diélectriques de natures différentes permet de contrôler le coefficient de température.

L'invention a donc pour objet un condensateur feuilleté du type à coefficient de température défini et à bonne stabilité dans le temps, constitué par un empilement d'éléments diélectriques séparés par des électrodes, lesdites électrodes étant reliées par des connexions électriques latérales, les paires entre elles et les impaires entre elles, les éléments diélectriques comprenant deux matériaux diélectriques différents, caractérisé en ce que les électrodes sont constituées de métallisations déposées sur les faces opposées de l'un des deux diélectriques, l'empilement étant réalisé de façon à ce qu'une même électrode sépare deux couches diélectriques de natures différentes, le diélectrique supportant les électrodes étant du polypropylène ou du polyester.

L'invention sera mieux comprise et d'autres avantages apparaîtront au moyen de la description qui va suivre, donnée à titre non limitatif, et des figures annexées parmi lesquelles :

- la figure 1 est une vue en coupe d'une partie d'un condensateur feuilleté selon l'invention,

- la figure 2 est une vue en coupe d'une partie d'un condensateur feuilleté du type laque selon l'invention.

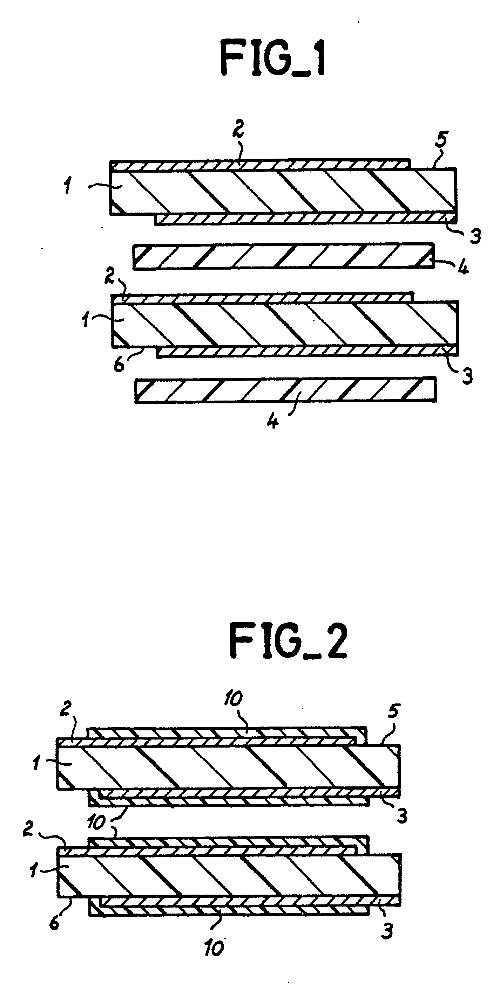

Les figures 1 et 2 sont des vues en coupe transversales d'empilements destinés à former des condensateurs. On n'a représenté que quelques couches mais elles suffisent à illustrer l'invention.

Selon la figure 1, le film diélectrique 1 supporte sur ses deux faces des métallisations 2 et 3. Il existe ainsi un condensateur élémentaire constitué par le diélectrique 1 et les électrodes 2 et 3. Entre chaque film métallisé est intercalé un second film diélectrique 4 non métallisé. Lorsque l'empilement sera réalisé, on aura également un condensateur élémentaire constitué par le diélectrique 4 et les électrodes 2 et 3. Le condensateur final obtenu résultera de la mise en parallèle de tous les condensateurs élémentaires ainsi formés. Il est avantageux que les métallisations 2 et 3 ne recouvrent pas entièrement les faces du film 1 pour laisser subsister des marges latérales respectivement référencées 5 et 6. Pour un même film, on disposera donc d'une marge située d'un côté pour la métallisation 2 et de l'autre côté pour la métallisation 3. L'assemblage du condensateur est effectué de façon que les électrodes paires soient toutes connectées ensemble et les électrodes impaires ensemble.

Il est avantageux d'utiliser les associations de diélectriques suivantes. le film 1 est en polypropylène et le film 4 est en polystyrène. Autre solution, le film 1 est en polyester et le film 4 en polypropylène ou en polystyrène. Les métallisations 2 et 3 peuvent être réalisées en aluminium ou en étain selon les techniques connues de l'homme de l'art.

Le condensateur selon l'invention peut être obtenu par empilement selon la technique connue du bobinage sur une roue de grand diamètre. Il peut encore être obtenu individuellement par bobinage. Les faces latérales de l'empilement ou du bobinage sont métallisées selon la technique connue sous le nom de "schoopage".

Comme le montre la figure 1, il est avantageux que certaines conditions géométriques soient observées. Une plus faible largeur pour le film 4 que pour le film 1 permet d'assurer de meilleures prises de contact pour le schoopage. Il est préférable également que le film 4 déborde légèrement dans les marges 5 de façon à assurer une meilleure isolation électrique entre les électrodes qui l'encadrent.

A titre d'exemple, les dimensions des différents constituants du condensateur peuvent être ls suivantes :

- 4,5mm de large pour le film 1,
- 200 angströms d'épaisseur pour les métallisations,
- 4mm de large pour le film 4.

Ces dimensions correspondent à des largeurs de films facilement disponibles chez les fournisseurs mais peuvent être modifiées selon les besoins.

L'épaisseur des différentes couches diélectriques est déterminée en fonction de la capacité et du coefficient de température désirés. Le coefficient de température du condensateur final est donné par la relation :

$$K = \frac{(K_1 \times C_1) + (K_2 \times C_2)}{C_1 + C_2}$$

$K_1$ et $C_1$ étant respectivement le coefficient de température et la contribution capacitive du premier film diélectrique, $K_2$ et $C_2$ les paramètres correspondants pour le second film. On peut ainsi obtenir une répartition capacitive définie dans chacun des diélectriques et un coefficient de température compris entre ceux des deux diélectriques utilisés.

Dans le cas d'une asssociation de polypropylène (film 1) et de polystyrène (film 4), on obtiendra un coefficient de température compris entre celui du polypropylène (-300 ppm/OC) et celui du polystyrène (-100 ppm/°C) sur une plage de température allant de -55 à +85°C. L'absorption d'eau est très faible. La stabilité générale en dérive de capacité est inférieure à 0,5 %.

Dans le cas d'une association entre le polyester (film 1) et le polystyrène ou le polypropylène (film 2), on pourra obtenir un coefficient de température de 0 ppm/°C sur une plage de température allant de -55 à +85°C. Le coefficient de température du polyester étant très important et positif (environ 800 ppm/°C à 85°C), il incombe d'utiliser une épaisseur de film de polyester plus importante que celle du polystyrène ou du polypropylène. Ceci permettra de gérer le coefficient de température et de l'ajuster et également de limiter la prise en compte capacitive du polyester. On pourra ainsi limiter les variations de capacité en essais climatiques (dues aux absorptions d'eau du polyester) à 1 % maximum. La répartition capacitive est essentiellement à coefficient de température défini dans le polystyrène et le polypropylène.

par une couche de laque déposée sur les métallisations. La figure 2 représente une telle solution.

Sur la figure 2, où les mêmes références désignent les mêmes éléments qu'à la figure 1, la différence essentielle réside dans le fait que les couches diélectriques non métallisées sont remplacées par des dépôts de laque 10 effectués sur la plus grande partie de la surface des métallisations 2 et 3. Pour assurer une meilleure isolation électrique entre les métallisations encadrant deux dépôts de laque adjacents, il est préférable que la laque déborde de la métallisation du côté des marges latérales 5 et 6 comme cela est représenté sur la figure 2.

La laque peut être déposée par des méthodes connues de l'homme de l'art.

On peut ainsi réaliser des condensateurs en associant un film de polypropylène métallisé sur ses deux faces à une laque du type dérivé du styrène tel que l'acétoxystyrène polyallylbenzène et, dans ce cas, obtenir un coefficient de température nominal entre -100 ppm/°C et -300 ppm/°C pour une dérive de capacité de 0,5 %.

En associant un film de polyester (coefficient de température : environ 1 200 ppm/°C à température ambiante) à une laque telle que l'acétoxystyrène polyallylbenzène (-100 ppm/°C) et par répartition définie de l'épaisseur de chacun des diélectriques, on peut atteindre des coefficients de l'ordre de 0 ppm/°C sur une plage de température allant de -55 à +85°C.

L'invention procure les avantages suivants.

Elle permet la miniaturisation du composant. D'abord grâce à la méthode d'empilement inapplicable dans le cas de condensateurs à armatures massives. Ensuite, grâce au fait que l'épaisseur d'un film de polyester (lorsque ce matérieu est utilisé) disponible chez les fabricants est de 1,8 μ - (voire 1,5 μ) alors que les armatures massives en étain ou en aluminium ont 5 μ d'épaisseur. Ceci procure un gain volumique d'environ 36 % sur les armatures. Enfin, si on utilise un diélectrique laqué au lieu d'un diélectrique film, le gain volumique pour cette partie est de 27 %.

L'utilisation de film plastique métallisé sous vide permet le phénomène d'autocicatrisation à l'encontre de l'utilisation d'armatures massives en étain ou en aluminium.

En choisissant judicieusement le film plastique servant de support aux électrodes en fonction de ses propriétés thermomécaniques, on peut jouer sur les contraintes qu'il engendre sur le second film. L'épaisseur du film support intervient également dans l'action mécanique exercée sur le second·diélectrique.

## Revendications

1. Condensateur feuilleté du type à coefficient de température défini et à bonne stabilité dans le temps, constitué par un empilement d'éléments diélectriques séparés par des électrodes, lesdites électrodes étant reliées par des connexions électriques latérales, les paires entre elles et les impaires entre elles, les éléments diélectriques comprenant deux matériaux diélectriques différents, caractérisé en ce que les électrodes (2,3) sont constituées de métallisations déposées sur les faces opposées de l'un des deux diélectriques (1), l'empilement étant réalisé de façon à ce qu'une même électrode sépare deux couches diélectriques de natures différentes, le diélectrique (1) supportant les électrodes (2,3) étant du polypropylène ou du polyester.

2. Condensateur selon la revendications 1, caractérisé en ce que les connexions électriques latérales sont des métallisations déposées par - schoopage.

3. Condensateur selon l'une des revendications 1 ou 2, caractérisé en ce que les métallisations constituant les électrodes (2,3) sont des dépôts d'aluminium ou d'étain.

4. Condensateur selon l'une quelconque des revendications 1 à 3, caractérisé en ce que lesdites métallisations laissent subsister des marges latérales (5,6) du côté opposé à la liaison électrique avec les connexions latérales correspondantes.

5. Condensateur selon la revendication 4, caractérisé en ce que le diélectrique qui ne supporte pas les métallisations dépasse du bord des métallisations délimitant les marges (5,6).

6. Condensateur selon l'une quelconque des revendications 1 à 5, caractérisé en ce que les extrémités latérales du diélectrique ne supportant pas les électrodes sont situées en retrait par rapport aux extrémités latérales du diélectrique qui les supporte.

7. Condensateur selon l'une quelconque des revendications 1 à 6, caractérisé en ce que l'épaisseur des différents éléments diélectriques est choisie en fonction du coefficient de température désiré pour le condensateur.

8. Condensateur selon l'une quelconque des revendications 1 à 7, caractérisé en ce que, si l'élément diélectrique supportant les électrodes est du polypropylène, l'autre élément diélectrique (4) est un film de polystyrène.

9. Condensateur selon l'une quelconque des revendications 1 à 7, caractérisé en ce que, si l'élément diélectrique supportant les électrodes est du polyester, l'autre élément diélectrique (4) est un film de polypropylène ou de polystyrène.

10. Condensateur selon l'une quelconque des revendications 1 à 7, caractérisé en ce que le diélectrique ne supportant pas les électrodes est formé à partir de couches de laque (10) déposées sur les métallisations (2,3).

11. Condensateur selon la revendication 10, caractérisé en ce que la laque utilisée est un dérivé du styrène.

12. Condensateur selon la revendication 11, caractérisé en ce que la laque utilisée est de l'acétoxystyrène polyallylbenzène.

# FIG_1

# FIG_2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | EP-A-0 032 738 (MATSUSHITA ELECTRIC INDUSTRIAL CO. LTD) * Page 7, dernier alinéa - page 8, alinéa 2; figure 4 * --- | 1-6,9 | H 01 G 4/20 H 01 G 4/36 H 01 G 4/30 |
| X | DE-A-2 430 291 (MATSUSHITA ELECTRIC INDUSTRIAL CO. LTD) * Revendications * --- | 1,4-6,9 | |
| X | EP-A-0 130 113 (L.C.C. - C.I.C.E. COMPAGNIE EUROPEENNE DE COMPOSANTS ELECTRONIQUES) * Page 7, lignes 1-29; figures 3,4; page 3, lignes 4-22; page 5, ligne 30 - page 6, ligne 12 * --- | 1,2,4,5,10,11 | |
| X | FR-A-1 431 818 (SOCIETE DE METALLISATION SOUS VIDE ET APPLICATIONS DITE M.V.A., S.A.R.L.) * Colonne 2, alinéas 2,3; colonne 1, dernier alinéa * --- | 7 | |
| A | FR-A-2 535 516 (L.C.C. - C.I.C.E.) * Revendications 1-3 * --- | 1 | DOMAINES TECHNIQUES RECHERCHES (Int. Cl.4) H 01 G |
| A | US-A-4 555 746 (MATSUSHITA ELECTRIC IND. CO.) * Colonne 1, ligne 36 - colonne 3, ligne 24 * --- | 1-6,10 | |
| A | DE-B-1 283 393 (SIEMENS AG) * Revendications 1,3 * ----- | 11 | |

Le présent rapport a été établi pour toutes les revendications

| Lieu de la recherche | Date d'achèvement de la recherche | Examinateur |
|---|---|---|
| LA HAYE | 16-03-1988 | SCHUERMANS N.F.G. |